# NEUE EUROPÄISCHE PATENTSCHRIFT

(11) **EP 2 665 574 B2**
(45) Veröffentlichungstag und Bekanntmachung des Hinweises auf die Entscheidung über den Einspruch: **19.01.2022**
(45) Hinweis auf die Patenterteilung: 28.12.2016
(21) Anmeldenummer: 12700793.8
(22) Anmeldetag: 19.01.2012
(51) Int. Cl.: B23F 5/16

(54) **VERFAHREN DES HARTSCHÄLENS EINES WERKSTÜCKES UND DAZU AUSGELEGTE WERKZEUGMASCHINE**
METHOD FOR MACHINING A WORKPIECE AND MACHINE TOOL DESIGNED THEREFOR
PROCÉDÉ D'USINAGE D'UNE PIÈCE PAR ENLÈVEMENT DE COPEAUX, ET MACHINE-OUTIL MISE AU POINT À CETTE FIN

(30) Priorität: 20.01.2011 DE 102011009027
(43) Veröffentlichungstag der Anmeldung: 27.11.2013
(73) Patentinhaber: Gleason-Pfauter Maschinenfabrik GmbH, 71636 Ludwigsburg (DE)
(72) Erfinder: SCHWEIKER, Helmut, 71711 Steinheim an der Murr (DE); VOGEL, Andreas, 3208 Gurbrü (CH); BROGNI, Johannes, 3293 Dotzigen (CH)
(74) Vertreter: Leinweber & Zimmermann
(86) Internationale Anmeldenummer: PCT/EP2012/000249
(87) Internationale Veröffentlichungsnummer: WO 2012/098002

(56) Entgegenhaltungen:
- DE-A1-102008 037 514
- DE-A1-102009 003 338
- DE-C- 243 514
- DE-C1- 4 122 460
- US-A- 3 264 940
- KLOCKE F ET AL: "HARD GEAR FINISHING WITH A GEOMETRICALLY DEFINED CUTTING EDGE", GEAR TECHNOLOGY, RANDALL PUBLISHING CO. ELK GROVE, ILLINOIS, US, Bd. 16, Nr. 6, 1. November 1999 (1999-11-01), Seiten 24-29, XP000873761, ISSN: 0743-6858
- LINDBERG ROY A ED - LINDBERG ROY A: "Processes and Materials of Manufacture, The Milling Process", 1. Januar 1990 (1990-01-01), PROCESSES AND MATERIALS OF MANUFACTURE, ALLYN AND BACON, MASSACHUSETTS, PAGE(S) 326, XP002665752, ISBN: 978-0-205-11817-5 das ganze Dokument
- Hermann Plauter et al: "Pfauter-Wälzfräsen , Teil 1, Verfahren, Maschinen, Werkzeuge, Anwendungstechnik, Wechselräder", 1976, Berlin , Heidelberg , New York ISBN: 0387074465 pages 13-20 , 395 - 398, 451 , 452 , 459 - 461,

## Beschreibung

Die Erfindung betrifft ein Hartschälverfahren zum spanenden Bearbeiten eines um eine Werkstückachse drehend angetriebenen verzahnten Werkstückes, bei dem man ein um eine in radialer Achsabstandsrichtung von der Werkstückachse beabstandete Werkzeugachse drehend angetriebenes, verzahntes und mit einer an einer Stirnkante seiner Zähne gebildeten Schneide versehenes Bearbeitungswerkzeug in Form eines Schälrades unter einem Achskreuzwinkel zwischen den beiden Drehachsen in Wälzeingriff mit dem Werkstück bringt, in dem die Schneide in einer eine werkstückachsenparallelen Komponente aufweisenden Schneidbewegung Material vom Werkstück abträgt, und man das Bearbeitungswerkzeug zur Bearbeitung des Werkstückes über eine gewünschte axiale Erstreckung hinweg zusätzlich eine Vorschubbewegung mit einer werkstückachsenparallelen Komponente ausführen läßt, sowie eine für ein solches Bearbeitungsverfahren ausgelegte Werkzeugmaschine.

Spanende Bearbeitungsverfahren mit einer solchen Kinematik der beteiligten Maschinenachsen sind seit mehr als hundert Jahren bekannt (DE 243 514). Dazu gehört beispielsweise das Wälzschälen eines außen- oder innenverzahnten zylindrischen Werkrades mit einem Schälrad. Die folgenden Erläuterungen gelten aber, soweit anwendbar, durchaus auch für das Hartschälen.

Das Wälzschälen läßt sich wie das bekanntere Wälzfräsen in die Gruppe der spanenden Fertigungsverfahren mit geometrisch bestimmter Schneide einordnen. Im Gegensatz zum Wälzfräsen, bei dem dem Bearbeitungsprozeß als Vorbild aus der Antriebstechnik ein Schneckenradgetriebe dient, ist für das Wälzschälen als Vorbild das Schraubradgetriebe heranziehbar, das durch eine windschiefe Anordnung der Drehachsen von Werkrad und Schälrad charakterisiert ist. In diesem Zusammenhang wird für die Relativbewegung zwischen den beiden Rädern auch die Bezeichnung des Verschraubens der Räder verwendet.

Aufgrund der an den stirnseitigen Kanten der Zahnflanken des Schälrads gebildeten Schneide, die somit in einer Ebene liegt, welche zur Ebene orthogonal zur Werkstückachse um den Achskreuzwinkels zwischen den beiden Drehachsen geneigt ist, kann die Wälzbewegung zwischen Schälrad und Werkrad für eine rotierende Schneidbewegung genutzt werden, mit der die Verzahnung aus dem Werkradrohling erzeugt werden kann. Die Hauptschnittrichtung verläuft dabei entlang der Zahnlücke der hergestellten Verzahnung.

Gegenüber dem Wälzfräsen ergibt sich dabei als wesentlicher Vorteil eine bei gleichen Schrittgeschwindigkeiten höhere Schneidleistung, da in der gleichen Zeit kinematikbedingt ein größerer Schneideingriff realisiert ist. Zudem ist das Wälzschälen gerade für die vollständige Generierung oder Bearbeitung von Innenverzahnungen von Vorteil, bei der das Wälzfräsen nur eingeschränkt eingesetzt werden kann, und bei der das Wälzschälen auch gegenüber dem Wälzstoßen Vorteile hinsichtlich der Bearbeitungszeit bietet.

Demgegenüber weist das Wälzschälen Nachteile hinsichtlich der Auslegung der Werkzeuggeometrie auf, da man beim Wälzschälen nicht immer auf die Theorie des Bezugsprofils zurückgreifen kann. Auch wirken sich geringfügige Fehler im Übersetzungsverhältnis von Schälrad zu Werkrad, das im Vergleich zum Wälzfräsen deutlich geringer ist, unmittelbar auf die Qualität des hergestellten Werkrades aus, so dass äußerst präzise Maschineneinstellungen für eine qualitativ hohe Bearbeitung erforderlich sind.

Im Falle einer zu bearbeitenden Geradverzahnung ist das Schälrad bekannterweise als Schrägverzahnung (mit Schrägungswinkel β₀) ausgeführt, und der Achskreuzwinkel Σ ist gleich dem Schrägungswinkel β₀ des Schälrads gewählt. Soll das zu bearbeitende Werkrad ebenfalls eine Schrägverzahnung mit Schrägungswinkel β₂ erhalten, so wird dieser dem Achskreuzwinkel Σ aufgeschlagen, mit negativem Vorzeichen bei gleichsinniger und positivem Vorzeichen bei gegensinniger Flankenrichtung bezüglich der des Schälrads. Zudem ist beim Vorschub des Schälrades mit parallel zur Werkstückachsenrichtung Z dem Werkrad in bekannter Weise eine der für den Wälzeingriff ausgelegten Grunddrehung überlagerte Zusatzdrehung aufzuerlegen, um einen Verschnitt der Werkstückflanken beim Axialvorschub zu vermeiden. Eine ausführlichere Beschreibung der Grundlagen des mit gleicher Kinematik eingesetzten Hartschälens bei bereits gehärteten Werkstücken findet sich beispielsweise in Thomas Bausch et al, Innovative Zahnradfertigung, Expertverlag.

Grundsätzlich kann ein Werkrad beim Wälzschälen in einem einzigen Arbeitsgang mit nur einer durchgeführten Vorschubbewegung hergestellt werden. Insbesondere bei größerem Materialabtrag oder auch zur Verringerung der auftretenden Belastungskräfte auf das Schälrad ist aber auch bekannt, die Bearbeitung in mehreren Arbeitsgängen auszuführen, wobei das Schälrad zwischen zwei Vorschubbewegungen mit einer Rückholbewegung wieder in die Anfangsposition gebracht wird und bei der nächsten Vorschubbewegung in radialer Achsabstandsrichtung in einer größeren Schnitttiefe arbeitet. Dies ist beispielsweise in der DE 10 2008 037 514 A1 beschrieben.

KLOCKE F ET AL: "HARD GEAR FINISHING WITH A GEOMETRICALLY DE-FINED CUTTING EDGE", GEAR TECHNOLOGY, RANDALL PUBLISHING CO. ELK GROVE, ILLINOIS, US, Bd. 16, Nr. 6, 1. November 1999 (1999-11-01), Seiten 24-29, XP000873761, ISSN: 0743-6858 offenbart neben einem Schälwälzfräsverfahren (skive hobbing) auch das Hartschälverfahren (hard skiving) zur Hartfeinbearbeitung gehärteter Werkstücke.

Der Erfindung liegt die Aufgabe zugrunde, ein Hartschälverfahren dieser Kinematik bereitzustellen, bei dem eine bessere Qualität des bearbeiteten Werkstückes erreicht wird.

Die Aufgabe wird in verfahrenstechnischer Hinsicht durch eine Weiterbildung des eingangs beschriebenen Verfahrens gemäß Anspruch 1 gelöst.

Im Rahmen der Erfindung ist erkannt worden, dass man bei einem Vorschub mit werkstückachsenparalleler Vorschubbewegungskomponente, die der sich aus dem Wälzeingriff ergebenden werkstückachsenparallelen Schneidbewegungskomponente entgegengerichtet ist, eine verbesserte Qualität der auf diese Weise bearbeiteten geschnittenen Flächen erreicht werden. Während bei den bekannten Bearbeitungsverfahren, das Werkzeug den abgeschälten Span gleichermaßen in einer Stoßbewegung vor sich hat, wird bei dem erfindungsgemäßen Verfahren eine Zugbewegung des Werkzeugs ausgeführt. Dadurch kann die Gefahr eines eine Beeinträchtigung der Qualität der geschnittenen Zahnlücke verursachenden Verklemmens des Spans in der bearbeiteten Zahnlücke verringert werden.

Im übrigen können auch bei dem erfindungsgemäßen Verfahren die bekannten konstruktiven und kinematischen Gegebenheiten herangezogen werden, die auch bei der in dem bekannten Stand der Technik bestehenden Relation des Axialvorschubs und der Schneidbewegung im Hinblick auf die werkstückachsenparallele Komponente bestehen. Insbesondere kann ein Schälrad mit einem konischen Grundkörper herangezogen werden, das konstruktiv bereits die erforderlichen Freiwinkel aufweist. Es kann aber auch mit einem Schälrad zylindrischer Grundform gearbeitet werden, bei dem die Freiwinkel durch Maschinenachsbewegungen realisiert werden, insbesondere durch ein Verlagern des Schälrades (Außermittigkeit "e").

Des weiteren können mit dem Verfahren gerad- und schrägverzahnte Außen- und Innenverzahnungen hergestellt werden, innerhalb der Anforderungen an einen ausreichend großen Achskreuzwinkel ∑, die auch im Stand der Technik bestehen. Auch kann die Schneide im Treppenschliff ausgebildet sein.

In einer bevorzugten Verfahrensgestaltung werden einer erfindungsgemäßen Vorschubbewegung "auf Zug" ein oder mehrere Arbeitsgänge mit umgekehrter Vorschubbewegung, d. h. mit stoßendem Vorschub wie im Stand der Technik, vorangestellt. Somit wird bei einer Bearbeitung in Form von einem oder mehreren Schrupp-Arbeitsgängen gemäß dem Stand der Technik, bei denen etwaige schädliche Auswirkungen eines verklemmten Spans durch den Schlicht-Arbeitsgang als abschließenden Arbeitsgang wenigstens teilweise behoben werden können, dieser nachfolgende Schlicht-Arbeitsgang mit der erfindungsgemäßen "ziehenden" Vorschubbewegung in Kombination mit der aus der Wälzkopplung resultierenden rotierenden Schneidbewegung ausgeführt, bei dem dann kein Verklemmen des Spans mehr auftritt.

Grundsätzlich ist es denkbar, fürden einen oder die mehreren Arbeitsgänge eine radiale Zustellbewegung vorzunehmen, woraufhin in der Bearbeitung die axiale Vorschubbewegung erfolgt. In einigen Fällen, insbesondere bei der Herstellung von Werkstücken in Form von zylindrischen Achsen, die eine oder mehrere Verzahnungen tragen, kann es jedoch von Vorteil sein, ebenfalls eine radiale Vorschubbewegung durchzuführen, auch in zeitlicher Überlagerung mit der axialen Vorschubbewegung. Insbesondere kann in diesem Zusammenhang eine gewünschte Form eines axialen Einlaufs und/oder Auslaufs der Zahnlücke des Werkstücks geschnitten werden.

Je nach Steuerung der zeitlichen Überlagerung der Vorschubbewegungen läßt sich z.B. eine bogenförmige und tangential in die Zahnlücke einlaufende Form des Einlaufs und/oder Auslaufs herstellen. Alternativ kann an einen treppenförmigen Einlauf und/oder Auslauf gedacht werden. Man erhält mehr Spielraum für die axiale Bewegung des Werkzeugs.

Das Bearbeitungsverfahren läßt sich an bereits gehärteten Werkstücken vornehmen (Hartschälen).

Je nach Größe des herzustellenden Werkstückes, des Schälrads und des durch deren Schrägungswinkel vorgegebenen Achskreuzwinkels kann die Vorschubbewegung des Werkzeugs parallel zur Werkstückachse erfolgen, oder auch parallel zur Werkzeugachse, was bezüglich der Werkstückachse einer Kombination einer axialen und tangentialen Vorschubbewegung entspricht. Erstere ist insbesondere für Innenverzahnungen als hergestellte Verzahnungen vorteilhaft. Selbstverständlich ist unter Berücksichtigung der Schrägungswinkel und der Vorschubgeschwindigkeit in bekannter Weise die Zusatzdrehung des Werkstückes vorzunehmen, welche der zur Herstellung des Wälzeingriffs erforderlichen Grunddrehung zu überlagern ist, um für jede (Z-)Position des Werkzeuges auf der Werkstückachse die richtigen Wälzeingriffsverhältnisse zu erhalten.

Im allgemeinen kann ein Schälrad mit einer Schrägverzahnung ausgestattet sein. Sollte jedoch das herzustellende Werkstück bereits eine Verzahnung mit ausreichend großem Schrägungswinkel aufweisen, kann das Schälrad bevorzugt auch mit einer Geradverzahnung versehen sein.

In vorrichtungstechnischer Hinsicht wird eine Werkzeugmaschine zum Hartschälen gemäß Anspruch 9 unter Schutz gestellt.

Weitere Merkmale, Einzelheiten und Vorteile der Erfindung ergeben sich aus der weiteren Beschreibung mit Bezug auf die beiliegenden Figuren, von denen
- Fig. 1: eine perspektivische Darstellung eines Wälzeingriffs zwischen einem Schälrad und einem Werkrad zeigt,
- Fig. 2a, b: zwei Darstellungen von Achsenbeziehungen sind,
- Fig. 3: Richtungskomponenten von bei dem erfindungsgemäßen Verfahren auftretenden Schneid- und Vorschubbewegungen zeigt, und
- Fig. 4a, b: schematisch Enden einer Zahnlücke eines Werkstückes zeigt.

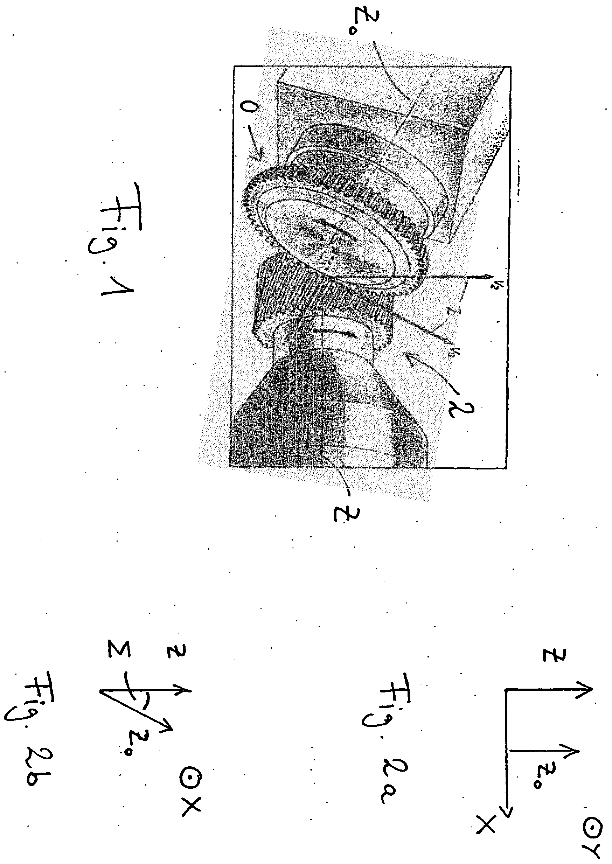

Das in Fig. 1 dargestellte Werkzeug in Form eines Schälrades 0 wird zum Wälzschälen des ebenfalls in Fig. 1 dargestellten Werkrades 2 verwendet. Dabei befinden sich die beiden Räder 0 und 2 in der Darstellung von Fig. 1 im Wälzeingriff miteinander, wobei sich die Werkzeugachse Z₀ und die Werkstückachse Z in bekannter Weise unter dem Achskreuzwinkel Σ kreuzen, welcher in dem in Fig. 1 gezeigten Beispiel dem Schrägungswinkel der am Werkrad 2 erzeugten Verzahnung entspricht. Die Lagebeziehung der Achsen ist in Fig. 2 nochmals in zwei selbsterklärenden Ansichten dargestellt.

Das Schälrad 0 weist einen konischen Grundkörper auf und hat somit bereits die zum Schneiden des Werkrades 2 erforderlichen Freiwinkel konstruktiv integriert. Die Verzahnung des Schälrades 0 ist als Geradverzahnung ausgeführt, und die Zähne des Schälrades 0 besitzen im Wälzeingriff die gleiche Orientierung wie die Zahnlücken des Werkrades 2. Durch die an der freien Stirnseite der Zähne des Schälrades 0 gebildete Schneide werden die Zahnlücken des Werkrades 2 durch eine rotierende Schneidbewegung erzeugt. Zur Bearbeitung über die volle Zahnbreite des Werkrades 2 führt das Schälrad 0 eine axiale Vorschubbewegung aus, die parallel zur Werkzeugachse Z₀ oder auch parallel zur Werkzeugachse Z gefahren werden kann. Gegebenenfalls ist dazu der für den Wälzeingriff erforderlichen Grunddrehung des Werkrads 2 eine Zusatzdrehung zu überlagern, die von dem Axialvorschub des Schälrades 0 hin abhängt, um in jeder Z-Position des Schälrades 0 die der herzustellenden Verzahnung passenden Wälzeingriffsbedingungen zu halten. In jedem Fall weist die axiale Vorschubbewegung eine Komponente f_{z} parallel zur Werkstückachse Z auf.

Die beim Wälzschälen entstehende Hauptschnittrichtung (Schnittgeschwindigkeit) ist in Fig.1 mit v_{c} dargestellt und ergibt sich aus den im Schneideingriff herrschenden tangentialen Geschwindigkeitsvektoren, v₀ der Schneide und v₂ des zu schneidenden Werkstückmaterials. Die zur Werstückachse Z parallele Komponente dieser Schneidrichtung (v_{c,∥}) zeigt in Fig. 1 von links nach rechts.

Soweit bis jetzt beschrieben, entspricht die obige Darstellung dem bekannten Wälzschälverfahren, bei dem die axiale Vorschubbewegung hinsichtlich ihrer werkstückachsenparallelen Komponente in Fig. 1 ebenfalls von links nach rechts verläuft. Dabei kann das Schälrad 0 im Falle mehrerer Arbeitsgänge mit zwischen zwei Arbeitsgängen erfolgender Rückholung des Schälrades 0 und nach und nach in Achsabstandsrichtung tieferem Schnitt der Materialabtrag auf die mehreren Arbeitsgänge verteilt werden kann.

Im Gegensatz zu diesem bekannten Wälzschälverfahren, wird nun vorgeschlagen, die axiale Vorschubbewegung des Schälrads 0 derart auszuführen, daß ihre werkstückachsenparallele Komponente der werkstückachsenparallelen Komponente der Schneidbewegung entgegengesetzt ist, also in Fig. 1 von rechts nach links verläuft, die Bewegung also eine "ziehende" Bewegung mit verminderter Spaneinklemmgefahr darstellt.

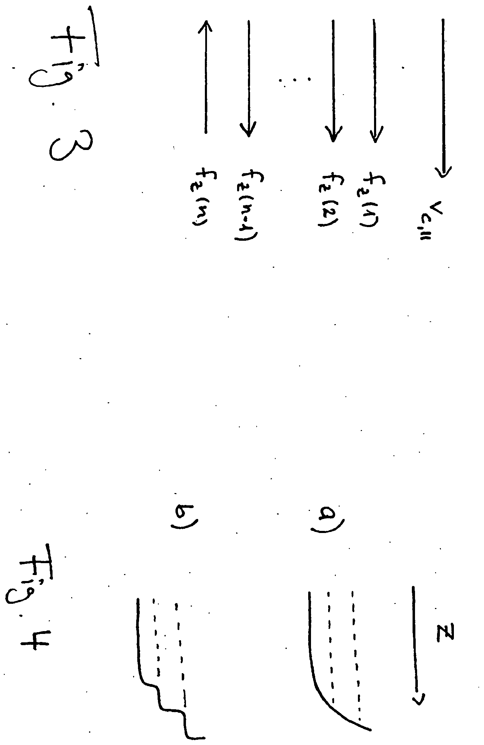

Diese im Vergleich zum Stand der Technik "umgekehrte' Vorschubbewegung wird in dem in Fig. 3 schematisch dargestellten Ausführungsbeispiel im letzten von n Arbeitsgängen, dem Schlichten ausgeführt, während die vorangegangenen n-1 z. B. Schrupp-Arbeitsgänge mit dem aus dem Stand der Technik bekannten Vorschub ausgeführt werden, bei dem die werkstückachsenparallele Vorschubkomponente in die gleiche Richtung zeigt wie die werkstückachsenparallele, durch den Wälzeingriff unter gekreuzten Achsen hervorgerufenen Schneidbewegung, die in der ersten Zeile von Fig. 3 dargestellt und mit v_{c,∥} bezeichnet ist.

In den folgenden Zeilen von Fig. 3 sind die werkstückachsenparallelen Komponenten der axialen Vorschubbewegung dargestellt, wobei die entsprechende Komponente im i-ten Arbeitsgang mit f_{z}(i) bezichnet ist.

Diesen axialen Vorschüben f_{z}(i) kann eine radiale, d. h. in Achsabstandsrichtung erfolgende weitere Vorschubbewegung überlagert werden, beispielsweise um an den axialen Enden der Zahnlücken eine gewünschte Geometrie zu erzeugen. Beispiele für eine solche Gestaltung des Zahnlückeneinlaufs oder auch Zahnlückenauslaufs sind in Fig. 4 dargestellt, wobei in Fig. 4a ein bogenförmiger Auslauf und in Fig: 4b ein treppenartiger Auslauf dargestellt ist. Die gestrichelten Linien in Fig. 4 stellen die Schnitttiefen für die aufeinanderfolgenden Arbeitsgänge dar, welche über die Überlagerung des radialen Vorschubs oder durch radiale Zustellung erreicht wird. Diese Variante der Formgebung der Zahnlückenenden kommt bevorzugt bei der Bearbeitung von zylindrischen Achsen zum Einsatz, welche über eine der Verzahnungsbreite entsprechenden axialen Länge mit einer Verzahnung ausgestattet sind und noch eine weitergehende, die erlaubte Werkzeugbewegung beeinträchtigende Struktur aufweisen, insbesondere auf unterschiedlichen axialen Abschnitten unterschiedliche Verzahnung tragen.

Für die oben erwähnten Schrupp-Schnitte und Schlicht-Schnitte können unterschiedliche Einstellparameter gewählt werden, insbesondere betreffend die Absolutdrehzahlen von Schälrad und Werkstück und/oder die Vorschubgeschwindigkeiten.

Die Erfindung ist nicht auf die im dargestellten Ausführungsbeispiels erläuterten Einzelheiten eingeschränkt. Vielmehr können die in der Beschreibung und in den Ansprüchen genannten Merkmale für die Verwirklichung der Erfindung in ihren verschiedenen Ausführungsformen einzeln und in Kombination wesentlich sein.

## Patentansprüche

1. Verfahren des Hartschälens eines um eine Werkstückachse (Z) drehend angetriebenen verzahnten Werkstückes (2), bei dem man unter Ausführung CNC-gesteuerter Maschinenachsbewegungen
ein um eine in radialer Achsabstandsrichtung (X) von der Werkstückachse (Z) beabstandete Werkzeugachse (Z₀) drehend angetriebenes, verzahntes und mit einer an einer Stirnkante seiner Zähne gebildeten Schneide versehenes Schälrad (0) unter einem Achskreuzwinkel (Σ) zwischen den beiden Drehachsen (Z, Z₀) in Wälzeingriff mit dem Werkstück (2) bringt, in dem die Schneide in einer eine werkstückachsenparallelen Komponente aufweisenden Schneidbewegung spanend Material vom Werkstück (2) abträgt, und man das Schälrad (0) zur Bearbeitung des Werkstückes (2) über eine gewünschte axiale Erstreckung hinweg zusätzlich eine Vorschubbewegung mit einer werkstückachsenparallelen Komponente ausführen lässt,
**dadurch gekennzeichnet, dass**
man die werkstückachsenparallelen Komponenten von Vorschubbewegung und Schneidbewegung einander entgegenrichtet.

2. Verfahren nach Anspruch 1, bei dem der Vorschubbewegung mit der werkstückachsenparallelen Komponente als axialer Vorschubbewegung eine in Achsabstandsrichtung verlaufende radiale Vorschubbewegung überlagert wird.

3. Verfahren nach Anspruch 2, bei dem durch die Überlagerung der beiden Vorschubbewegungen eine gewünschte Form eines axialen Einlaufs und/oder Auslaufs der Zahnlücke des Werkstücks geschnitten wird.

4. Verfahren nach Anspruch 3, bei dem die Form des Einlaufs und/oder Auslaufs bogenförmig ist und tangential in die Zahnlücke einläuft.

5. Verfahren nach Anspruch 3, bei dem die Form des Einlaufs und/oder Auslaufs treppenförmig ist.

6. Verfahren nach einem der vorhergehenden Ansprüche, bei dem eine Außenverzahnung bearbeitet wird, und der axiale Vorschub insbesondere parallel zur Werkzeugachse erfolgt.

7. Verfahren nach einem der Ansprüche 1 bis 5, bei dem eine Innenverzahnung bearbeitet wird, und der axiale Vorschub insbesondere parallel zur Werkstückachse erfolgt.

8. Verfahren nach einem der vorhergehenden Ansprüche, bei dem die bearbeitete Verzahnung eine Schrägverzahnung ist, und die Verzahnung des Schälrads eine Geradverzahnung.

9. Hartschälmaschine mit
einer eine Werkstückachse (Z), um die ein Werkstück (2) drehend antreibbar ist, definierenden Werkzeugspindel,
einer eine Werkzeugachse (Z₀), die gegenüber der Werkstückachse in radialer Achsabstandsrichtung (X) mit einstellbarem Abstand beabstandet ist, sie unter einem einstellbaren Achswinkel kreuzt und um die ein Schälrad (0) drehend antreibbar ist, definierenden Werkzeugspindel, sowie
einer Steuereinrichtung, die die Maschinenachsbewegungen derart CNC-steuert, dass das verzahnte und mit einer an einer Stirnseite seiner Zähne gebildeten Schneide versehene Schälrad in Wälzeingriff mit dem Werkstück gebracht wird, in dem die Schneide in einer eine werkstückachsparallelen Komponente aufweisenden Schneidbewegung Material vom Werkstück abträgt, wobei das Schälrad zusätzlich eine Vorschubbewegung mit einer werkstückachsenparallelen Komponente ausführt,
**dadurch gekennzeichnet, dass**
die Steuereinrichtung die Maschinenachsbewegungen weiter derart CNC-steuert, dass die werkstückachsenparallelen Komponenten von Vorschubbewegung und Schneidbewegung einander entgegengerichtet sind, und deren Steuereinrichtung die Maschinenachsbewegungen weiter derart steuert, dass ein Verfahren nach einem der Ansprüche 1 bis 8 ausgeführt wird.

## Claims

1. A method of hard-skiving a toothed workpiece (2) driven in rotary movement about a workpiece axis (Z), wherein under realization of CNC-controlled machine axis movements,
a toothed circular skiving tool (0) driven in rotary movement about a tool axis (Z₀) that is spaced apart from the workpiece axis (Z) in the radial axial spacing direction (X) and is provided with a cutting edge formed at a front edge of its teeth is brought into rolling engagement with the workpiece (2) at an axis crossing angle (Σ) between the two rotary axes (Z, Z₀), wherein the cutting edge removes material from the workpiece (2) in a cutting movement that has a component parallel to the workpiece axis, and the circular skiving tool (0) additionally performs a feed movement with a component parallel to the workpiece axis in order to machine the workpiece (2) over a desired axial range,
**characterised in that**
the feed movement component parallel to the workpiece axis and the cutting movement component parallel to the workpiece axis are oriented in opposite directions relative to one another.

2. The method according to Claim 1, wherein the feed movement with the component parallel to the workpiece axis as an axial feed movement is superimposed with a radial feed movement running in the axial spacing direction.

3. The method according to Claim 2, wherein by superimposing the two feed movements, a desired shape of an axial entry and/or exit of the tooth gap of the workpiece is cut.

4. The method according to Claim 3, wherein the shape of the entry and/or exit is arcuate and runs tangentially into the tooth gap.

5. The method according to Claim 3, wherein the shape of the entry and/or exit is step-like.

6. The method according to any of the preceding claims, wherein external teeth are machined/produced, and the axial feed takes place in particular parallel to the tool axis.

7. The method according to any of Claims 1 to 5, wherein internal teeth are machined/produced, and the axial feed takes place in particular parallel to the workpiece axis.

8. The method according to any of the preceding claims, wherein the teeth that are machined/produced are helical teeth, and the teeth of the circular skiving tool are spur gear teeth.

9. A machine tool for hard-skiving, comprising
a tool spindle defining a workpiece axis (Z) about which a workpiece (2) can be driven in rotary movement,
a tool spindle defining a tool axis (Z₀) that is spaced apart from the workpiece axis at an adjustable distance in the radial axial spacing direction (X), crossing the workpiece axis at an adjustable axis angle, and about which a circular skiving tool (0) can be driven in rotary movement, and
a control device that controls the movements of the machine axes in a CNC-control in such a way that the toothed circular skiving tool provided with a cutting edge formed on a front side of its teeth is brought into rolling engagement with the workpiece in which the cutting edge removes material from the workpiece in a cutting movement that has a component parallel to the workpiece axis, the circular skiving tool additionally performing a feed movement with a component parallel to the workpiece axis,
**characterised in that**
the control device additionally controls the machine axis movements in such a way that the feed movement component parallel to the workpiece axis and the cutting movement component parallel to the workpiece axis are oriented in opposite directions relative to one another, and the control device of which further controls the movements of the machine axis in such a way that a method according to any of Claims 1 to 8 is performed.

## Revendications

1. Procédé de décolletage dur d'une pièce (2) dentée entraînée en rotation autour d'un axe (Z) de la pièce, dans lequel, par réalisation des movements CNC-contrôlés
une roue de décolletage (0) dentée, munie d'un tranchant formé sur une arête frontale de ses dents et entraînée en rotation autour d'un axe d'outil (Z₀) espacé de l'axe (Z) de la pièce dans une direction d'espacement radial (X) est mise en prise avec la pièce (2) par roulement selon un angle d'intersection (Σ) entre les deux axes de rotation (Z, Z₀), le tranchant venant enlever de la matière de la pièce (2) dans un mouvement de coupe présentant une composante parallèle à l'axe de pièce, et la roue de décolletage (0) est en outre amenée à effectuer, sur une étendue axiale souhaitée, un mouvement d'avancée présentant une composante parallèle à l'axe de pièce, aux fins de l'usinage de la pièce (2),
**caractérisé en ce que**
les composantes du mouvement d'avancée et du mouvement de coupe qui sont parallèles à l'axe de la pièce étant orientées à l'opposé l'une de l'autre.

2. Procédé selon la revendication 1, dans lequel un mouvement d'avancée radial orienté dans la direction d'espacement des axes vient se superposer au mouvement d'avancée présentant la composante parallèle à l'axe de la pièce en tant que mouvement d'avancée axial.

3. Procédé selon la revendication 2, dans lequel ladite superposition des deux mouvements d'avancée permet de couper une forme souhaitée pour les côtés axiaux d'entrée et/ou de sortie de l'entredent de la pièce.

4. Procédé selon la revendication 3, dans lequel la forme du côté d'entrée et/ou de sortie est arquée et entre tangentiellement dans l'entredent.

5. Procédé selon la revendication 3, dans lequel la forme du côté d'entrée et/ou de sortie est en escalier.

6. Procédé selon l'une des revendications précédentes, dans lequel il est usiné/produit une denture extérieure, et l'avancée axiale s'effectue notamment parallèlement à l'axe de l'outil.

7. Procédé selon l'une quelconque des revendications 1 à 5, dans lequel il est usiné/produit une denture intérieure, et l'avancée axiale s'effectue notamment parallèlement à l'axe de la pièce.

8. Procédé selon l'une des revendications précédentes, dans lequel la denture usinée/produite est une denture hélicoïdale, et la denture de la roue de décolletage est une denture droite.

9. Machine-outil pour le décolletage dur, comportant
une broche d'outil définissant un axe de pièce (Z) autour duquel une pièce (2) peut être entraînée en rotation,
une broche d'outil définissant un axe d'outil (Z₀) espacé de l'axe de la pièce dans une direction d'espacement radial (X) selon un écartement réglable et croisant l'axe de la pièce en formant un angle d'axes réglable et autour duquel une roue de décolletage (0) peut être entraînée en rotation, ainsi que
un dispositif de commande qui commande les déplacements des axes de la machine en manière CNC-contrôlé de telle manière que la roue de décolletage dentée, munie d'un tranchant formé sur une arête frontale de ses dents est mise en prise avec la pièce par roulement, le tranchant venant enlever de la matière de la pièce dans un mouvement de coupe présentant une composante parallèle à l'axe de la pièce, la roue de décolletage effectuant en outre un mouvement d'avancée présentant une composante parallèle à l'axe de la pièce,
**caractérisé en ce que**
le dispositif de commande effectue en outre la commande des déplacements des axes de la machine de manière que les composantes du mouvement d'avancée et du mouvement de coupe qui sont parallèles à l'axe de la pièce sont orientées à l'opposé l'une de l'autre, et dont le dispositif de commande effectue en outre la commande des déplacements des axes de la machine de manière à permettre l'exécution d'un procédé selon l'une quelconque des revendications 1 à 8.
